# FASCICULE DE BREVET EUROPEEN

(11) **EP 2 701 977 B1**
(45) Date de publication et mention de la délivrance du brevet: **09.09.2015**
(21) Numéro de dépôt: 12715115.7
(22) Date de dépôt: 20.04.2012
(51) Int. Cl.: B64G 1/64, F16B 11/00

(54) **PROCÉDÉ DE LIAISON TEMPORAIRE ENTRE DEUX PIÈCES, TELLES QUE DEUX ÉTAGES D'UN LANCEUR SPATIAL, ET ENSEMBLE DE DEUX PIÈCES RELIÉES TEMPORAIREMENT**
VERFAHREN ZUM ZEITWEILIGEN VERBINDUNG VON ZWEI TEILEN, WIE ZWEI STUFEN EINER TRÄGERRAKETE, UND ANORDNUNG MIT ZWEI ZEITWEILIG VERBUNDENEN TEILEN
METHOD FOR TEMPORARILY CONNECTING TWO PARTS TOGETHER, SUCH AS TWO STAGES OF A SPACE LAUNCHER, AND ASSEMBLY INCLUDING TWO TEMPORARILY CONNECTED PARTS

(30) Priorité: 26.04.2011 FR 1153560
(43) Date de publication de la demande: 05.03.2014
(73) Titulaire: Airbus Defence and Space SAS, 78130 Les Mureaux (FR)
(72) Inventeur: VEILLERAUD, Frédéric, 78510 TRIEL SUR SEINE (FR)
(74) Mandataire: Ahner, Philippe
(86) Numéro de dépôt international: PCT/EP2012/057274
(87) Numéro de publication internationale: WO 2012/146538

(56) Documents cités:
- EP-A1- 0 905 022
- US-A1- 2003 133 748
- US-A1- 2007 080 260

## Description

### DOMAINE TECHNIQUE

La présente invention se rapporte au domaine des liaisons temporaires entre deux pièces.

Elle a été initialement développée pour une application à la liaison structurale entre deux étages d'un lanceur spatial, mais elle peut également être appliquée à la liaison entre une charge utile et un lanceur spatial, un satellite, une sonde, un missile ou un avion, ou encore à la liaison de tout type de pièces devant être séparées sur commande.

L'invention concerne en particulier un procédé de liaison temporaire entre deux pièces, ainsi qu'un ensemble de deux pièces reliées temporairement par un élément de liaison.

### ÉTAT DE LA TECHNIQUE ANTÉRIEURE

Les lanceurs spatiaux comprennent plusieurs étages prévus pour se séparer successivement au cours du vol. Avant leur séparation, ces étages sont reliés deux-à-deux par des liaisons structurales, c'est-à-dire aptes à transmettre les efforts mécaniques, notamment de traction, entre ces étages, et capables de se rompre sur commande pour provoquer la séparation de ces étages.

Dans les lanceurs de type connu, cf. US 2007/0080260, ces liaisons structurales sont par exemple réalisées au moyen de deux brides radiales métalliques et d'une sangle métallique de serrage longitudinal de ces brides.

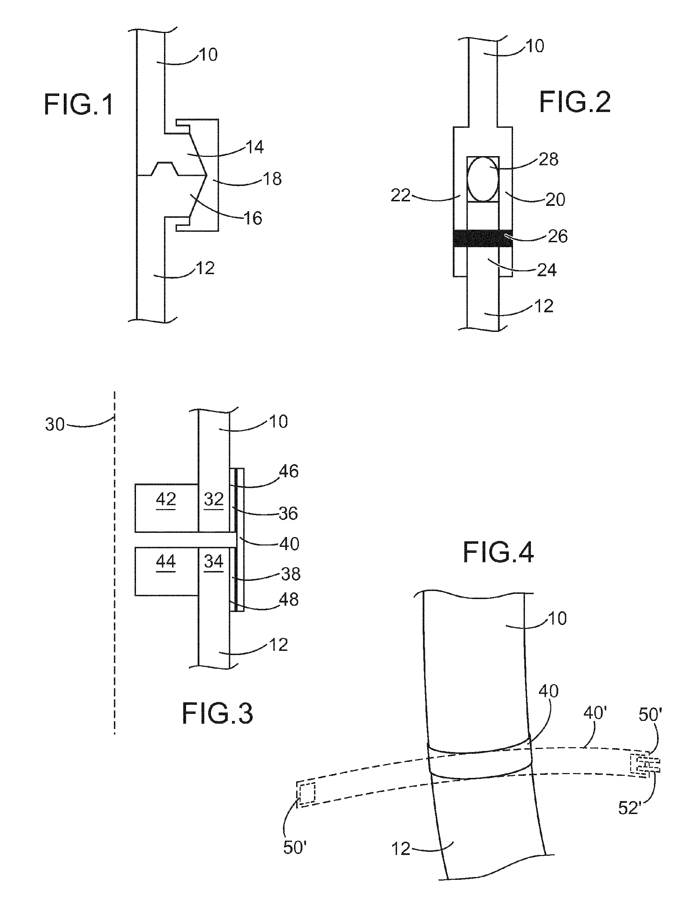

La figure 1 annexée est une demi-vue schématique partielle en coupe longitudinale illustrant ce type de liaison. On y aperçoit deux parois cylindriques de révolution 10 et 12 faisant respectivement partie de deux étages consécutifs d'un lanceur spatial, et comprenant chacune une bride radiale respective 14, 16, ainsi qu'une sangle de serrage 18 entourant les brides 14 et 16. Les brides et la sangle sont conformées de sorte que la sangle assure un serrage longitudinal ou pincement des brides l'une contre l'autre. Dans ce type de liaison, la sangle 18 présente deux extrémités libres qui sont reliées par des moyens de serrage commandés du type à rupture détonante ou analogues, tels que des boulons pyrotechniques (non visibles sur la figure).

Ce type de liaison présente l'inconvénient de nécessiter un contact mutuel entre des brides radiales d'une part, et entre ces brides et la sangle d'autre part.

La présence de ces brides induit un surcroît de masse non souhaitable. De plus, le contact entre les brides et la sangle requiert une maîtrise délicate des frottements entre ces éléments ainsi qu'une grande précision géométrique dans la réalisation de ceux-ci, ce qui induit un surcoût considérable et rend difficile l'utilisation de matériaux composites.

C'est pourquoi les éléments participant aux liaisons de ce type sont réalisés en métal, ce qui induit un surcoût supplémentaire du fait de la masse relativement élevée de ces éléments. De plus, cela rend difficile l'utilisation de tels éléments lorsque les parois cylindriques 10 et 12 sont en un matériau composite.

On connait également des liaisons structurales assurées par un ensemble de brides intégrant une charge détonante, telle qu'un cordeau pyrotechnique.

La figure 2 annexée est une demi-vue schématique partielle en coupe longitudinale illustrant ce type de liaison. On y aperçoit deux parois cylindriques de révolution 10 et 12 faisant respectivement partie de deux étages consécutifs d'un lanceur spatial, et dont celle 10 de l'étage supérieur comporte à son extrémité inférieure deux brides longitudinales 20, 22 entre lesquelles est engagée une bride longitudinale 24 de la paroi 12 de l'étage inférieur, cette dernière bride 24 étant fixée aux deux brides 20 et 22 par des boulons 26 ou analogues. L'ensemble des trois brides précitées délimite une cavité dans laquelle est disposé un cordeau pyrotechnique 28 permettant lors de son explosion, de rompre les brides 20, 22 de l'étage supérieur.

Du fait du contact entre les trois brides, ce type de liaison présente des inconvénients similaires à ceux du premier type de liaison en termes de maîtrise des frottements entre les brides et de précision géométrique dans la réalisation de ces brides. Ce type de liaison rend également difficile l'utilisation de matériaux composites. Ce type de liaison présente en outre l'inconvénient de requérir un assemblage complexe.

### EXPOSÉ DE L'INVENTION

L'invention a notamment pour but d'apporter une solution simple, économique et efficace à ces problèmes, permettant d'éviter au moins en partie les inconvénients précités.

L'invention propose à cet effet un procédé de réalisation d'une liaison temporaire entre deux pièces, comportant au moins les étapes de :
- mise en place d'un élément de liaison dans une position de service dans laquelle ledit élément de liaison entoure l'ensemble formé par lesdites pièces et est soumis à une contrainte interne de déformation ;
- verrouillage de la position dudit élément de liaison par des moyens de maintien sous contrainte à relâchement de contrainte commandé qui relient deux extrémités opposées dudit élément de liaison ;
- liaison dudit élément de liaison à chacune desdites pièces par des moyens de fixation ;
et dans lequel ladite contrainte interne de déformation est d'un niveau suffisant pour permettre à l'élément de liaison de se désolidariser desdites pièces en se déployant vers une position de repos, lorsque lesdits moyens de maintien sont commandés de manière à libérer lesdites extrémités dudit élément de liaison.

La contrainte interne de l'élément de liaison constitue ainsi une force de séparation utilisable sur commande pour provoquer la désolidarisation de l'élément de liaison, et donc la rupture de la liaison entre les pièces.

Cette contrainte interne est obtenue par une précontrainte préalable de l'élément de liaison, de sorte que le positionnement de cet élément dans sa position de service requiert une déformation dudit élément au cours de laquelle celui-ci est conduit à emmagasiner de l'énergie mécanique potentielle.

Lorsque la contrainte appliquée par les moyens de maintien sous contrainte est relâchée suite à une commande à cet effet, la contrainte interne de l'élément de liaison induit celui-ci à se déployer vers sa position de repos sans contrainte en cassant ou en arrachant les moyens de fixation précités.

A cette fin, l'énergie emmagasinée dans l'élément de liaison du fait de sa contrainte interne peut à elle seule être supérieure à l'énergie de liaison des moyens de fixation.

En variante, cette énergie emmagasinée dans l'élément de liaison peut être additionnée à une énergie d'impulsion communiquée à l'élément de liaison par les moyens de maintien sous contrainte au moment du relâchement de ces derniers.

D'une manière générale, ce procédé de liaison permet l'utilisation de moyens de liaison simples, légers et peu encombrants, en évitant les problèmes rencontrés avec les liaisons de l'art antérieur en ce qui concerne la maîtrise des frottements entre pièces en contact.

Il est à noter que le fait que l'élément de liaison entoure l'ensemble formé par les deux pièces se rencontre dans plusieurs configurations, parmi lesquelles notamment une première configuration dans laquelle chaque pièce est une paroi cylindrique entourée par une partie de l'élément de liaison, comme cela apparaîtra plus clairement dans ce qui suit, ainsi qu'une deuxième configuration dans laquelle une première des pièces est un corps cylindrique entouré par l'élément de liaison tandis que la seconde pièce est, par exemple, une trappe ou analogue, qui obture une ouverture du corps cylindrique en étant retenue par l'élément de liaison.

Par ailleurs, les pièces peuvent être réalisées en un matériau métallique ou composite.

L'élément de liaison peut également être réalisé en un matériau métallique ou composite.

Dans un mode de réalisation préféré de l'invention, l'étape de liaison dudit élément de liaison à chacune desdites pièces est mise en oeuvre postérieurement aux étapes de mise en place dudit élément de liaison et de verrouillage de la position de celui-ci.

La contrainte interne de l'élément de liaison étant reprise par les moyens de maintien sous contrainte dès l'étape de verrouillage de la position de l'élément de liaison, la fixation ultérieure de celui-ci aux deux pièces peut ainsi être effectuée sensiblement sans contrainte.

De cette manière, les moyens de fixation peuvent assurer une transmission particulièrement efficace des efforts de liaison entre les deux pièces par l'intermédiaire de l'élément de liaison, sans être perturbés par la reprise des efforts de maintien sous contrainte de cet élément de liaison.

Dans le mode de réalisation préféré de l'invention, le procédé comporte une étape, préalable à la mise en place dudit élément de liaison, dans laquelle deux couches d'une colle durcissable sont appliquées respectivement sur chacune desdites pièces, ladite étape de liaison comprenant le durcissement de ladite colle de sorte que celle-ci fasse partie desdits moyens de fixation.

L'utilisation d'une couche de colle comme moyen de fixation permet une liaison surfacique entre chaque pièce et l'élément de liaison, de nature à permettre une transmission optimale des efforts de liaison entre les pièces.

A cet effet, la colle est de préférence une colle rigide.

Le durcissement de la colle, qui réalise la fixation de l'élément de liaison à chacune des pièces, est provoqué après le verrouillage de la position de l'élément de liaison de sorte que ce durcissement de la colle se fait sensiblement sans contrainte.

A cet égard, la colle est de préférence une colle thermodurcissable ou photodurcissable.

D'une manière générale, la colle est choisie pour que les couches de cette colle présentent une résistance aux efforts de traction qui soit suffisamment faible pour permettre l'arrachement de l'élément de liaison lors de la libération des extrémités de ce dernier par les moyens de maintien sous contrainte, ainsi qu'une résistance aux efforts de cisaillement qui soit suffisamment grande pour permettre une transmission efficace des efforts de liaison entre les pièces.

A titre d'exemple, les colles à base de résine époxy, telles que celles commercialisées par la société Henkel sous la marque déposée Hysol, sont particulièrement bien adaptées à l'invention, notamment les modèles portant la référence commerciale EA9321, EA9394, EA9395, et EA9396.

D'une manière générale, l'utilisation de couches de colle comme moyen de fixation rend le procédé particulièrement avantageux lorsque les pièces sont réalisées en un matériau composite.

Par ailleurs, la colle précitée incorpore avantageusement des microbilles minérales formant entretoises entre chacune desdites pièces et ledit élément de liaison.

L'utilisation de telles microbilles permet, d'une manière connue en soi, d'homogénéiser l'épaisseur de la couche de colle de chaque pièce ainsi que la répartition des contraintes au sein de ladite couche.

Elle permet ainsi de limiter les risques qu'une couche de colle ne se rompe que partiellement lorsque la rupture de la liaison entre les pièces est souhaitée.

En variante ou de manière complémentaire, les moyens de fixation peuvent comprendre des organes de fixation traversant tels que des rivets, des boulons ou analogues, dont la résistance aux efforts de traction est suffisamment faible pour permettre leur rupture lors de la libération des extrémités de l'élément de liaison par les moyens de maintien sous contrainte, mais dont la résistance aux efforts de cisaillement est suffisamment grande pour permettre une transmission efficace des efforts de liaison entre les pièces.

Dans le mode de réalisation préféré de l'invention, les moyens de maintien sous contrainte appliquent audit élément de liaison des efforts sensiblement orthogonaux à une direction principale de transmission d'efforts de traction entre lesdites pièces.

Ainsi, le maintien sous contrainte de l'élément de liaison peut être bien décorrelé de la transmission des principaux efforts de traction entre les pièces.

Dans ce cas, chaque pièce comprend avantageusement une structure composite comportant un pli superficiel de fibres de renfort noyées dans une résine durcie et s'étendant parallèlement à ladite direction principale de transmission d'efforts de traction entre lesdites pièces.

L'orientation des fibres du pli superficiel permet ainsi une transmission optimale des efforts de traction entre les pièces. De plus, cette orientation des fibres rend le pli relativement fragile vis-à-vis des efforts qui sont induits par la contrainte interne de l'élément de liaison lorsque le maintien sous contrainte de ce dernier est interrompu suite à une commande à cet effet des moyens de maintien sous contrainte. L'orientation des fibres du pli superficiel permet donc de faciliter la rupture de la liaison entre les pièces au moment voulu.

Lesdits moyens de maintien sous contrainte sont de préférence à rupture détonante.

Dans ce cas, la rupture de ces moyens provoque le relâchement de la contrainte appliquée à l'élément de liaison, et la détonation à l'origine de cette rupture permet en outre à ces moyens de communiquer une énergie, sous forme d'impulsion, à l'élément de liaison, pour faciliter son déploiement à l'encontre des moyens de fixation précités.

Ces moyens de maintien sous contrainte prennent par exemple la forme de boulons pyrotechniques.

En variante, ces moyens peuvent ne pas être à rupture détonante mais être d'un type différent lorsque cela présente un intérêt. Ces moyens peuvent par exemple comprendre un mécanisme de verrouillage à déblocage électrique.

D'une manière connue en soi, le procédé selon l'invention peut en outre comprendre la mise en place de moyens d'écartement conçus pour induire un écartement des deux pièces après la rupture de la liaison entre celles-ci, ces moyens pouvant comprendre des ressorts, des propulseurs ou d'autres éléments conventionnels.

Dans le mode de réalisation préféré de l'invention, lesdites pièces sont deux parois cylindriques structurales respectives de deux étages d'un lanceur spatial, et ledit élément de liaison est une sangle circonférentiellement précontrainte qui entoure chacune desdites parois lorsque cette sangle est dans sa position de service.

Le procédé selon l'invention est en effet bien adapté à la liaison de deux étages d'un lanceur spatial.

Dans ce cas, les moyens de maintien sous contrainte sollicitent les extrémités libres de la sangle.

On entend par sangle à la fois une sangle réalisée d'un seul tenant et présentant deux extrémités libres, et une sangle formée par l'assemblage de plusieurs segments raccordés deux-à-deux par des moyens de liaison adéquats. Ces moyens de liaison peuvent éventuellement être des moyens de maintien sous contrainte à relâchement commandé. Dans ce cas, il est possible de définir arbitrairement deux extrémités libres de la sangle, au sens de la description qui précède, parmi les extrémités des segments constituant cette sangle. Néanmoins, il est à noter que toutes les liaisons entre segments de cette sangle sont alors fonctionnellement équivalentes, et sont alors notamment à même de participer à la rupture sur commande de la liaison entre les deux pièces.

De plus, lorsque l'élément de liaison est fixé à chaque paroi cylindrique précitée au moyen d'une couche de colle, cette couche de colle se présente de préférence sous la forme d'une bande entourant ladite paroi cylindrique.

De cette manière, la transmission des efforts de liaison entre les parois cylindriques peut être répartie d'une manière homogène sur toute la circonférence des parois.

L'invention concerne également un ensemble comprenant deux pièces reliées temporairement par un élément de liaison entourant ledit ensemble, dans lequel :
- ledit élément de liaison est soumis à une contrainte interne de déformation,
- ledit ensemble comprend des moyens de maintien sous contrainte à relâchement de contrainte commandé qui sollicitent mutuellement deux extrémités opposées dudit élément de liaison de manière à s'opposer à ladite contrainte interne de déformation,
- ledit ensemble comprend des moyens de fixation dudit élément de liaison à chacune desdites pièces,
- ladite contrainte interne de déformation est d'un niveau suffisant pour permettre à l'élément de liaison de se désolidariser desdites pièces en se déployant vers une position de repos, lorsque lesdits moyens de maintien sous contrainte sont commandés de manière à relâcher cette contrainte.

Un tel ensemble présente sensiblement les mêmes avantages que le procédé de liaison décrit ci-dessus. Cet ensemble peut être obtenu par le procédé décrit ci-dessus ou par un procédé analogue.

Dans le mode de réalisation préféré de l'invention, lesdits moyens de fixation comprennent au moins deux couches de colle durcie qui revêtent respectivement lesdites pièces et établissent une liaison surfacique entre chacune de ces pièces et ledit élément de liaison.

Une telle liaison surfacique permet un transfert optimal des efforts de liaison entre les pièces.

La colle précitée incorpore avantageusement des microbilles, comme décrit ci-dessus.

De plus, lesdits moyens de maintien sous contrainte appliquent de préférence audit élément de liaison des efforts sensiblement orthogonaux à une direction principale de transmission d'efforts de traction entre lesdites pièces.

Dans ce cas, chacune desdites pièces comprend avantageusement une structure composite comportant un pli superficiel de fibres de renfort noyées dans une résine durcie et s'étendant parallèlement à ladite direction principale de transmission d'efforts de traction entre lesdites pièces.

D'une manière connue en soi, l'ensemble précité peut en outre comprendre des moyens d'écartement conçus pour induire un écartement des deux pièces après la rupture de la liaison entre celles-ci, ces moyens pouvant par exemple comprendre des ressorts, des propulseurs ou d'autres éléments conventionnels.

Dans le mode de réalisation préféré de l'invention, ledit élément de liaison comprend une sangle, et chacune desdites pièces comprend une paroi cylindrique entourée par ladite sangle.

Une telle sangle permet une transmission des efforts de liaison entre les pièces bien répartie sur toute la circonférence de ces pièces, en particulier lorsque la fixation de la sangle sur chaque pièce est réalisée au moyen d'une couche de colle comme décrit ci-dessus.

Comme expliqué ci-dessus, on entend par sangle à la fois une sangle réalisée d'un seul tenant et présentant deux extrémités libres, et une sangle formée par l'assemblage de plusieurs segments raccordés deux-à-deux par des moyens de liaison adéquats pouvant éventuellement être des moyens de maintien sous contrainte à relâchement commandé.

Dans le mode de réalisation préféré de l'invention, chaque paroi cylindrique comprend avantageusement un raidisseur circonférentiel fixé sur une surface interne de cette paroi en regard des moyens de fixation correspondants, afin de reprendre une partie des efforts induits par la contrainte interne de la sangle, notamment au niveau d'une zone de chaque paroi diamétralement opposée à la zone de raccordement des extrémités de la sangle par les moyens de maintien sous contrainte.

L'invention concerne encore un engin spatial, tel qu'un lanceur, un satellite ou une sonde, ou encore un missile ou un avion, comprenant au moins un ensemble du type décrit ci-dessus.

### BRÈVE DESCRIPTION DES DESSINS

L'invention sera mieux comprise, et d'autres détails, avantages et caractéristiques de celle-ci apparaîtront à la lecture de la description suivante faite à titre d'exemple non limitatif et en référence aux dessins annexés dans lesquels :
- la figure 1, déjà décrite, est une demi-vue schématique partielle en coupe longitudinale d'un lanceur spatial d'un premier type connu ;
- la figure 2, déjà décrite, est une demi-vue schématique partielle en coupe longitudinale d'un lanceur spatial d'un deuxième type connu ;
- la figure 3 une demi-vue schématique partielle en coupe longitudinale d'un lanceur spatial selon un mode de réalisation préféré de l'invention ;
- la figure 4 est une vue schématique partielle de côté du lanceur spatial de la figure 3.

Dans l'ensemble de ces figures, des références identiques peuvent désigner des éléments identiques ou analogues.

### EXPOSÉ DÉTAILLÉ D'UN MODE DE RÉALISATION PREFERE

Les figures 3 et 4 illustrent d'une manière générale une liaison structurale temporaire entre deux étages consécutifs d'un lanceur spatial.

Plus précisément, la figure 3 représente une zone de liaison entre deux parois structurales 10, 12 respectives de ces deux étages, ces parois présentant globalement une symétrie de révolution autour d'un axe longitudinal 30 de ces étages et étant réalisées en un matériau composite.

Une telle liaison structurale est destinée principalement à la transmission, entre les étages précités, d'efforts de traction parallèles à l'axe longitudinal 30, mais aussi dans une moindre mesure, d'efforts de cisaillement.

Chacune des parois structurales 10, 12 de ces étages comporte une partie d'extrémité respective 32, 34 dont la surface externe est recouverte d'une couche de colle correspondante 36, 38 qui s'étend circonférentiellement autour de l'axe 30 sous la forme d'une bande annulaire.

Dans l'exemple particulier décrit sur la figure 3, la colle est une colle durcissable rigide à base de résine époxy, commercialisée par la société Henkel sous la marque déposée Hysol, portant l'une des références commerciales EA9321, EA9394, EA9395, et EA9396.

De plus, des microbilles minérales sont incorporées dans cette colle pour homogénéiser l'épaisseur de chaque couche de colle ainsi que la répartition des contraintes au sein de chaque couche de colle.

Par ailleurs, une sangle de liaison 40, également réalisée en un matériau composite, entoure les parties d'extrémité 32, 34 des parois 10, 12 et adhère à ces parties d'extrémité 32, 34 par l'intermédiaire des couches de colle correspondantes 36, 38.

La sangle de liaison 40 est précontrainte circonférentiellement de sorte que son maintien dans sa position de service au contact des parois 10 et 12 induise, au sein de cette sangle, une contrainte interne de déformation se manifestant essentiellement par des efforts de flexion.

Ces efforts sont majoritairement repris par des boulons pyrotechniques 52' (figure 4) qui relient deux extrémités libres 50' de la sangle de liaison 40 de manière à garantir le verrouillage de la position de celle-ci au contact des parois 10, 12. Ces boulons ne sont pas visibles sur la figure 3 mais sont visibles en position de repos de la sangle sur la figure 4. Le verrouillage de la sangle 40 se fait sous contrainte, en ce sens qu'il s'effectue à l'encontre des efforts internes de flexion précités.

Par ailleurs, les parois 10, 12 des étages du lanceur comportent chacune, de manière facultative, un raidisseur circonférentiel 42, 44 fixé sur leur surface interne en regard de la couche de colle 36, 38 correspondante, afin de reprendre une partie des efforts de flexion précités, notamment au niveau d'une zone de chaque paroi 10, 12 diamétralement opposée à la zone de liaison des extrémités libres de la sangle 40.

Dans l'exemple particulier décrit sur la figure 3, chaque paroi 10, 12 réalisée en un matériau composite comporte un pli externe superficiel 46, 48 formé de fibres de renfort, par exemple en carbone, qui sont noyées dans une résine durcie et qui s'étendent parallèlement à l'axe 30 des parois 10, 12. Les couches de colle 36, 38 recouvrent donc ces plis externes superficiels 46, 48.

En fonctionnement, les efforts, notamment les efforts de traction longitudinaux, c'est-à-dire parallèles à l'axe 30, transitent efficacement entre les parois structurales 10, 12 des étages du lanceur par la sangle de liaison 40 et par les couches de colle 36, 38, et cela sur toute la circonférence de ces parois 10, 12.

Il est à noter que les couches de colle transmettent d'autant mieux les efforts de traction entre les étages du lanceur que la part des efforts de flexion de la sangle 40 repris par ces couches de colle est petite, et donc que la part de ces efforts de flexion repris par les boulons pyrotechniques et par les raidisseurs circonférentiels 42 et 44 est grande.

Lorsque la séparation des deux étages du lanceur est souhaitée, une commande adéquate est envoyée aux boulons pyrotechniques pour déclencher leur rupture par détonation.

Cette rupture a pour conséquence que la majeure partie des efforts de flexion de la sangle de liaison 40 n'est plus reprise et s'exerce dès lors sur chaque couche de colle 36, 38, ce qui entraîne un arrachement progressif de ces couches de colle et/ou du pli externe superficiel 46, 48 des parois 10, 12 sur lequel ces couches de colle sont appliquées.

Cet arrachement se propage depuis la zone des parois 10, 12 initialement en regard des extrémités libres de la sangle 40 jusqu'à la zone diamétralement opposée de manière à permettre au final une séparation des étages du lanceur.

Cette séparation peut alors être favorisée par des moyens conventionnels de séparation, tels que des ressorts ou des propulseurs, qui équipent le lanceur spatial d'une manière facultative dans le cadre de la présente invention.

La liaison temporaire décrite ci-dessus peut être avantageusement réalisée par un procédé selon l'invention.

Dans un exemple particulier d'un tel procédé, il est d'abord appliqué sur des parties d'extrémité respectives des parois 10, 12 de deux étages d'un lanceur spatial, une couche 36, 38 en forme de bande annulaire d'une colle durcissable rigide à base de résine époxy dans laquelle sont incorporées des microbilles minérales.

Ensuite, une sangle de liaison précontrainte circonférentiellement est déformée à l'encontre de sa précontrainte pour être positionnée autour des deux couches de colle 36, 38. Cette étape est illustrée par la figure 4 qui montre la sangle de liaison à l'état de repos 40' (en trait interrompu), et la même sangle en position de service 40 (en trait continu) qui est donc soumise à une contrainte interne de déformation.

Dans une étape suivante, des boulons pyrotechniques reliant les extrémités libres 50' de la sangle sont serrés de manière à contraindre la sangle de liaison 40 dans sa position de service au contact des couches de colle 36, 38 respectives des parois structurales 10 et 12. Ces boulons, dans leur position de serrage, sont masqués sur la figure 4, mais ils sont visibles en position de repos de la sangle et désignés par la référence 52' sur cette figure.

Ensuite, le durcissement de la colle est provoqué, par exemple par chauffage dans le cas où la colle est du type thermodurcissable.

Les efforts induits par la contrainte interne de déformation de la sangle étant repris par les boulons pyrotechniques, le durcissement de la colle peut se faire sensiblement sans contrainte.

Ce procédé, décrit à titre d'exemple non limitatif, permet ainsi de réaliser une liaison temporaire au moyen d'éléments simples et légers, tout en permettant une transmission efficace des efforts de liaison entre les étages du lanceur.

## Revendications

1. Procédé de réalisation d'une liaison temporaire entre deux pièces (10, 12), **caractérisé en ce qu'**il comporte au moins les étapes de :
- application de deux couches (36, 38) d'une colle durcissable respectivement sur chacune desdites pièces (10, 12) ; puis
- mise en place d'un élément de liaison (40, 40') dans une position de service dans laquelle ledit élément de liaison entoure l'ensemble formé par lesdites pièces et est soumis à une contrainte interne de déformation ;
- verrouillage de la position dudit élément de liaison (40, 40') par des moyens de maintien sous contrainte (52') à relâchement de contrainte commandé qui relient deux extrémités opposées (50') dudit élément de liaison ; puis
- durcissement de ladite colle de sorte que lesdites couches de colle forment des moyens de fixation (36, 38) reliant ledit élément de liaison (40, 40') à chacune desdites pièces (10, 12) ;
et dans lequel ladite contrainte interne de déformation est d'un niveau suffisant pour permettre à l'élément de liaison (40, 40') de se désolidariser desdites pièces (10, 12) en se déployant vers une position de repos, lorsque lesdits moyens de maintien sous contrainte (52') sont commandés de manière à libérer lesdites extrémités dudit élément de liaison.

2. Procédé selon la revendication 1, dans lequel ladite colle incorpore des microbilles minérales formant entretoises entre chacune desdites pièces (10, 12) et ledit élément de liaison (40, 40').

3. Procédé selon la revendication 1 ou 2, dans lequel lesdits moyens de maintien sous contrainte (52') appliquent audit élément de liaison (40, 40') des efforts sensiblement orthogonaux à une direction principale (30) de transmission d'efforts de traction entre lesdites pièces (10, 12).

4. Procédé selon la revendication 3, dans lequel chacune desdites pièces (10, 12) comprend une structure composite comportant un pli superficiel (46, 48) de fibres de renfort noyées dans une résine durcie et s'étendant parallèlement à ladite direction principale (30) de transmission d'efforts de traction entre lesdites pièces (10, 12).

5. Procédé selon l'une quelconque des revendications 1 à 4, dans lequel lesdits moyens de maintien sous contrainte (52') sont à rupture détonante.

6. Procédé selon l'une quelconque des revendications 1 à 5, dans lequel lesdites pièces sont deux parois cylindriques structurales respectives (10, 12) de deux étages d' un lanceur spatial, et ledit élément de liaison est une sangle (40, 40') circonférentiellement précontrainte qui entoure chacune desdites parois lorsque cette sangle est dans sa position de service.

7. Ensemble comprenant deux pièces (10, 12) reliées temporairement par un élément de liaison (40, 40') entourant ledit ensemble, **caractérisé en ce que** :
- ledit élément de liaison (40, 40') est soumis à une contrainte interne de déformation,
- ledit ensemble comprend des moyens de maintien sous contrainte (52') à relâchement de contrainte commandé qui relient deux extrémités opposées (50') dudit élément de liaison (40, 40') de manière à s'opposer à ladite contrainte interne de déformation,
- ledit ensemble comprend des moyens de fixation (36, 38) dudit élément de liaison (40, 40') à chacune desdites pièces (10, 12),
- lesdits moyens de fixation comprennent au moins deux couches de colle durcie (36, 38) qui revêtent respectivement lesdites pièces (10, 12) et établissent une liaison surfacique entre chacune de ces pièces et ledit élément de liaison (40, 40'),
- ladite contrainte interne de déformation est d'un niveau suffisant pour permettre à l'élément de liaison (40, 40') de se désolidariser desdites pièces (10, 12) en se déployant vers une position de repos, lorsque lesdits moyens de maintien sous contrainte (52') sont commandés de manière à libérer lesdites extrémités (50') dudit élément de liaison (40, 40').

8. Ensemble selon la revendication 7, dans lequel lesdits moyens de maintien sous contrainte (52') appliquent audit élément de liaison (40, 40') des efforts sensiblement orthogonaux à une direction principale de transmission d'efforts de traction entre lesdites pièces (10, 12).

9. Ensemble selon la revendication 8, dans lequel chacune desdites pièces (10, 12) comprend une structure composite comportant un pli superficiel (46, 48) de fibres de renfort qui sont noyées dans une résine durcie et qui s'étendent parallèlement à ladite direction principale de transmission d'efforts de traction entre lesdites pièces.

10. Ensemble selon l'une quelconque des revendications 7 à 9, dans lequel ledit élément de liaison comprend une sangle (40, 40'), et chacune desdites pièces comprend une paroi cylindrique (10, 12) entourée par ladite sangle.

11. Engin spatial, tel qu'un lanceur, un satellite ou une sonde, missile, ou avion, comprenant au moins un ensemble selon l'une quelconque des revendications 7 à 10.

## Patentansprüche

1. Verfahren zur Herstellung einer zeitweiligen Verbindung zwischen zwei Teilen (10, 12), **dadurch gekennzeichnet, dass** es wenigstens die folgenden Schritte aufweist:
- Auftragen von zwei Schichten (36, 38) eines härtbaren Klebers jeweils auf jedes der Teile (10, 12); dann
- Anordnen eines Verbindungselements (40, 40') in einer Gebrauchsposition, in welcher das Verbindungselement die von den Teilen gebildete Baugruppe umgibt und einer inneren Verformungsspannung unterworfen ist;
- Verriegeln der Position des Verbindungselements (40, 40') durch Mittel zum Unter-Spannung-Halten (52') mit gesteuerter Spannungslösung, die zwei gegenüberliegende Enden (50') des Verbindungselements verbinden; dann
- Härtung des Klebers, so dass die Kleberschichten Mittel zur Fixierung (36, 38) bilden, welche das Verbindungselement (40, 40') mit jedem der Teile (10, 12) verbinden;
und bei dem der Grad der inneren Verformungsspannung ausreicht, um die Loslösung des Verbindungselements (40, 40') von den Teilen (10, 12) durch Entfaltung in eine Ruheposition zu ermöglichen, wenn die Mittel zum Unter-Spannung-Halten (52') derart gesteuert werden, dass sie die Enden des Verbindungselements freigeben.

2. Verfahren nach Anspruch 1, bei dem der Kleber mineralische Mikroperlen einschließt, die zwischen jedem der Teile (10, 12) und dem Verbindungselement (40, 40') Abstandhalter bilden.

3. Verfahren nach Anspruch 1 oder 2, bei dem die Mittel zum Unter-Spannung-Halten (52') an das Verbindungselement (40, 40') Kräfte anlegen, die im Wesentlichen orthogonal zu einer Hauptrichtung (30) der Zugkraftübertragung zwischen den Teilen (10, 12) sind.

4. Verfahren nach Anspruch 3, bei dem jedes der Teile (10, 12) eine Verbundstruktur umfasst, die eine Oberflächenlage (46, 48) von Verstärkungsfasern aufweist, welche in ein gehärtetes Harz eingebettet sind und sich parallel zur Hauptrichtung (30) der Zugkraftübertragung zwischen den Teilen (10, 12) erstrecken.

5. Verfahren nach einem der Ansprüche 1 bis 4, bei dem die Mittel zum Unter-Spannung-Halten (52') sprengbar sind.

6. Verfahren nach einem der Ansprüche 3 bis 5, bei dem die Teile zwei jeweilige zylindrische Strukturwände (10, 12) zweier Stufen eines Raumfahrzeugs sind und das Verbindungselement ein umfangsmäßig vorgespanntes Band (40, 40') ist, das beide Wände umgibt, wenn sich dieses Band in der Gebrauchsposition befindet.

7. Baugruppe, die zwei Teile (10, 12) umfasst, welche zeitweilig durch ein Verbindungselement (40, 40') verbunden sind, das die Baugruppe umgibt, **dadurch gekennzeichnet, dass**:
- das Verbindungselement (40, 40') einer inneren Verformungsspannung unterworfen ist,
- die Baugruppe Mittel zum Unter-Spannung-Halten (52') mit gesteuerter Spannungslösung umfasst, die zwei gegenüberliegende Enden (50') des Verbindungselements (40, 40') in solcher Weise verbinden, dass sie der inneren Verformungsspannung entgegenwirken,
- die Baugruppe Mittel zur Fixierung (36, 38) des Verbindungselements (40, 40') an jedem der Teile (10, 12) umfasst,
- die Mittel zur Fixierung wenigstens zwei Schichten eines härtbaren Klebers (36, 38) umfassen, die jeweils die Teile (10, 12) überziehen und eine Oberflächenverbindung zwischen jedem dieser Teile und dem Verbindungselement (40, 40') herstellen,
- der Grad der inneren Verformungsspannung ausreicht, um die Loslösung des Verbindungselements (40, 40') von den Teilen (10, 12) durch Entfaltung in eine Ruheposition zu ermöglichen, wenn die Mittel zum Unter-Spannung-Halten (52') derart gesteuert werden, dass sie die Enden (50') des Verbindungselements (40, 40') freigeben.

8. Baugruppe nach Anspruch 7, bei der die Mittel zum Unter-Spannung-Halten (52') an das Verbindungselement (40, 40') Kräfte anlegen, die im Wesentlichen orthogonal zu einer Hauptrichtung der Zugkraftübertragung zwischen den Teilen (10, 12) sind.

9. Baugruppe nach Anspruch 8, bei der jedes der Teile (10, 12) eine Verbundstruktur umfasst, die eine Oberflächenlage (46, 48) von Verstärkungsfasern aufweist, welche in ein gehärtetes Harz eingebettet sind und sich parallel zur Hauptrichtung der Zugkraftübertragung zwischen den Teilen erstrecken.

10. Baugruppe nach einem der Ansprüche 7 bis 9, bei der das Verbindungselement ein Band (40, 40') umfasst, und jedes der Teile eine zylindrische Wand (10, 12) umfasst, die von dem Band umgeben ist.

11. Raumfahrzeug wie eine Trägerrakete, ein Satellit oder eine Sonde, eine Rakete oder ein Flugzeug, das wenigstens eine Baugruppe nach einem der Ansprüche 7 bis 10 umfasst.

## Claims

1. A method for making a temporary connection between two parts (10, 12), **characterised in that** it includes at least the steps of:
- applying two layers (36, 38) of a curable adhesive in each of said parts (10, 12) respectively; and then
- placing a connecting element (40, 40') into an operating position wherein said connecting element surrounds the assembly formed by said parts and is subjected to an internal deformation strain;
- locking the position of said connecting element (40, 40') by stress-keeping means (52') with controlled stress relief which connect two opposite ends (50') of said connecting element; and then
- curing said adhesive such that said layers of adhesive form attaching means (36, 38) connecting said connecting element (40, 40') to each of said parts (10, 12);
and wherein said internal deformation stress is at a sufficient level to enable the connecting element (40, 40') to be unsecured from said parts (10, 12) by extending to a rest position, when said stress-keeping means (52') are controlled so as to release said ends from said connecting element.

2. The method according to claim 1, wherein said adhesive incorporates mineral microbeads forming spacers between each of said parts (10, 12) and said connecting element (40, 40').

3. The method according to any of claims 1 and 2, wherein said stress-keeping means (52') apply to said connecting element (40, 40') strains substantially orthogonal to a main direction (30) of transmitting tensile strains between said parts (10, 12).

4. The method according to claim 3, wherein each of said parts (10, 12) comprises a composite structure including a surface ply (46, 48) of reinforcing fibres embedded in a cured resin and extending parallel to said main direction (30) of transmitting tensile strains between said parts (10, 12).

5. The method according to any of claims 1 to 4, wherein said stress-keeping means (52') are of the explosive rupture type.

6. The method according to any of claims 1 to 5, wherein said parts are two respective structural cylindrical walls (10, 12) of two stages of a space launcher, and said connecting element is a circumferentially pre-stressed strap (40, 40') which surrounds each of said walls when this strap is in its operating position.

7. An assembly comprising two parts (10, 12) temporarily connected by a connecting element (40, 40') surrounding said assembly, **characterised in that**:
- said connecting element (40, 40') is subjected to an internal deformation stress,
- said assembly comprises stress-keeping means (52') with controlled stress relief, which connect two opposite ends (50') of said connecting element (40, 40') so as to counteract said internal deformation stress,
- said assembly comprises means (36, 38) for attaching said connecting element (40, 40') to each of said parts (10, 12),
- said attaching means comprise at least two layers of cured adhesive (36, 38) which respectively coat said parts (10, 12) and make a surface connection between each of these parts and said connecting element (40, 40'),
- said internal deformation stress is at a sufficient level to enable the connecting element (40, 40') to be unsecured from said parts (10, 12) by extending to a rest position, when said stress-keeping means (52') are controlled so as to release said ends (50') of said connecting element (40, 40').

8. The assembly according to claim 7, wherein said stress-keeping means (52') apply to said connecting element (40, 40') strains substantially orthogonal to a main direction of transmitting tensile strains between said parts (10, 12).

9. The assembly according to claim 8, wherein each of said parts (10, 12) comprises a composite structure including a surface ply (46, 48) of reinforcing fibres which are embedded in a cured resin and which extend parallel to said main direction of transmitting tensile strains between said parts.

10. The assembly according to any of claims 7 to 9, wherein said connecting element comprises a strap (40, 40'), and each of said parts comprises a cylindrical wall (10, 12) surrounded by said strap.

11. A space vehicle, such as a launcher, a satellite or a probe, missile or airplane, comprising at least one assembly according to any of claims 7 to 10.
